(19) Europäisches Patentamt
European Patent Office
Office européen des brevets

(11) Publication number: 0 204 564
A2

(12) EUROPEAN PATENT APPLICATION

(21) Application number: 86304270.1

(22) Date of filing: 04.06.86

(51) Int. Cl.[4]: C 01 G 39/02
C 01 G 41/02

(30) Priority: 05.06.85 US 741423

(43) Date of publication of application:
10.12.86 Bulletin 86/50

(84) Designated Contracting States:
BE DE FR GB IT SE

(71) Applicant: WESTINGHOUSE ELECTRIC CORPORATION
Westinghouse Building Gateway Center
Pittsburgh Pennsylvania 15235(US)

(72) Inventor: Markowitz, Joseph Morris
5133 Leona Drive
Pittsburgh Pennsylvania 15227(US)

(72) Inventor: Clare, George Hadley
3150 Princeton Road
Greenburg Pennsylvania 15601(US)

(72) Inventor: Krasicki, Bernard Ronald
101 B. Garden Drive
Pittsburgh Pennsylvania 15236(US)

(72) Inventor: Robertson, William Harold
424 South Main Street
Poland Ohio 44514(US)

(74) Representative: van Berlyn, Ronald Gilbert
23, Centre Heights
London, NW3 6JG(GB)

# (54) Method of separating molybdenum or tungsten from non-volatile contaminants.

(57) Method of separating molybdenum or tungsten from non-volatile contaminants. The contaminated molybdenum or tungsten is heated to between 800 and 1100°C and reacted with oxygen to completely oxidize the molybdenum or tungsten. The $MoO_3$ or $WO_2$ is volatile having a vapor pressure of the order of one atmosphere at 1100°C while the contaminant metal oxides have a very low vapor pressure, allowing the molybdenum oxide or tungsten oxide gas to be separated from the non-volatile contaminants, cooled and condensed.

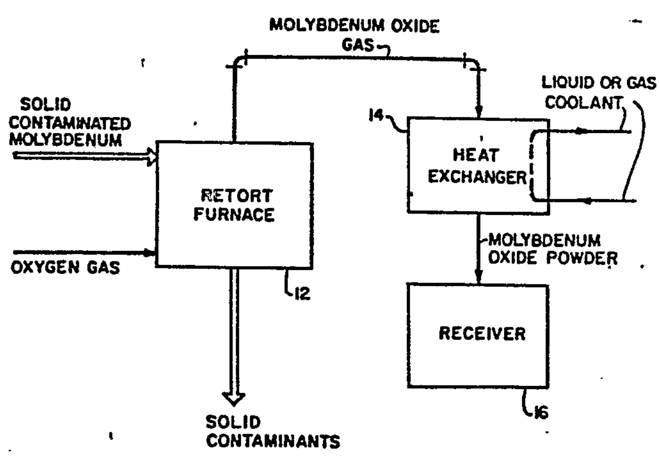


EP 0 204 564 A2

Croydon Printing Company Ltd.

# METHOD OF SEPARATING MOLYBDENUM OR TUNGSTEN FROM NON-VOLATILE CONTAMINANTS

This method relates to a method of separating molybdenum or tungsten from non-volatile contaminants.

The basic component of the core of nuclear reactors, both pressurized water reactors and boiling water reactors, is the cylindrical fuel pellet. The pellet is composed of slightly enriched, approximately 2.5 to 4.0 wt.% $U^{235}$, uranium dioxide powder. Before the fabrication of the pellet itself, however, the uranium must be enriched from approximately 0.7 wt% $U^{235}$ to the 2.5 to 4.0 wt.% $U^{235}$. The enrichment process requires the use of uranium hexafluoride gas ($UF_6$). The enriched uranium is received in the form of $UF_6$ at the fuel fabrication facility. The $UF_6$ must then be converted into uranium dioxide, $UO_2$. This is accomplished by the ammonium diuranate (ADU) process.

$$UF_6 + 2H_2O \rightarrow UO_2F_2 + NH_4OH \rightarrow (NH_4)_2\ U_2O_7 \rightarrow UO_2$$

The product of this process is a fine oxide powder containing 88.15 wt.% uranium. It has a theoretical density of 10.97 grams per cc. and a melting point over 2800°C. The uranium is now in the isotopic and chemical state required for use as nuclear fuel in a core. To get the uranium dioxide powder shaped for fabrication into fuel assemblies, it is made into pellets by cold pressing and then sintered at high temperatures to attain the required density. The sintered uranium dioxide is chemically inert at reactor

temperatures and pressures. The consequences of any accidental breach of the cladding are minimized by the ability of the uranium dioxide lattice to retain fission products and to resist corrosion caused by high temperature water.

The sintering process is carried out by placing the pellets in carrier vessels called boats for transport of the pressed $UO_2$ pellets through sintering furnaces. These boats are often fabricated from molybdenum which is inert to the hydrogen cover gas generally used in such furnaces. At the sintering temperatures used, $UO_2$ is somewhat volatile and condenses on the boats which, after repeated use, acquire a significant surface layer of uranium dioxide contamination. These boats must ultimately be discarded, a loss not only of the valuable molybdenum, but disposal costs must also be paid for handling the contaminated scrap. It is desirable to decontaminate the molybdenum, a commodity of value, as part of the waste handling process.

Other processes for removing surface contamination use some form of abrading or removal of the film coating by attempting to dissolve the coating without dissolving the underlying metal. These methods fall short of complete separation--important in $UO_2$ decontamination--and are accomplished by the generation of additional waste, contaminated abrasive particles or contaminated acid solution.

According to the the present invention, a method of separating molybdenum or tungsten from non-volatile contaminants is characterized by a method of separating molybdenum or tungsten from non-volatile contaminants, characterized by heating the contaminated molybdenum or tungsten to a temperature sufficient to vaporize the associated high vapor pressure oxide, passing sufficient oxygen over the heated, contaminated molybdenum or tungsten to stoichiometrically react the latter with oxygen to form the high vapor pressure oxide thereof, passing the gaseous

oxide of molybdenum or tungsten through a condenser, causing it to solidify, and
recovering the separated oxide of molybdenum or tungsten. The condensed oxide is pure and commercially valuable, exceeding the costs of the process.

In order that the invention can be more clearly understood, a preferred embodiment thereof will now be described, by way of example, with reference to the accompanying drawing, which is a schematic diagram of a process for separating molybdenum from non-volatile contaminants, including non-volatile oxides.

While uranium dioxide, $UO_2$, normally oxidizes to a non-volatile higher oxide, $U_3O_8$, as do most heavy metal oxides such as $Cr_2O_3$, $MnO_2$, $Fe_2O_3$, $Fe_3O_4$, or NiO, molybdenum oxidizes to the volatile oxide $MoO_3$, which has a high vapor pressure approaching one atmosphere at 1100°C. The oxidation of molybdenum proceeds in at least two steps:

$$Mo + O_2 \rightarrow MoO_2$$

$$MoO_2 + \frac{1}{2}O_2 \rightarrow MoO_3$$

In these steps the $O_2$ may be present as pure oxygen, as the oxygen component of air, or as a component of any oxidizing reagent. The higher oxide, $MoO_3$ is quite volatile and sublimates at 760°C so although it melts at about 800°C it can be vaporized rapidly and under suitable conditions the amount of liquid phase can be minimized.

Referring to Fig. 1, a mechanical mixture of $UO_2$ and Mo can be treated with oxygen gas in a retort furnace 12 at a suitable temperature in the range of 800-1100°C. The volatile $MoO_3$ leaves the furnace and is condensed by cooling it in a heat exchanger 14; the condensed solid is accumulated in a receiver 16 outside the furnace and recovered. The non-volatile contaminant oxides remain behind and can be swept or vacuumed out of the furnace.

In a practical application of the process, molybdenum boats that have been used in sintering $UO_2$ cold pressed pellets are separated from condensed vapor $UO_2$ on the molybdenum boats. The contaminated material to be processed is in the form of carrier boats having dimensions of about 7 inches by 7 inches by 3½ inches with a ¼ inch wall thickness and having a total weight of about 16 pounds, and scrap fragments of these boats. This material is charged into a retort furnace 12 with a capacity of several hundred kilograms. Heating a charge of the indicated size to about 1100°C is well within the capabilities of the commonly available furnaces. A stream of oxygen is provided to the charge of contaminated Mo boats during the heat treating and distillation processes. For a charge of 225 kilograms (500 pounds) approximately 78,000 liters of oxygen gas at standard temperature pressure (STP) of oxygen gas is required for stoichiometric transformation of the charge to $MoO_3$, plus a small additional amount for oxidizing the $UO_2$ contaminant from $UO_2$ to $U_3O_8$. This amount of oxygen can be supplied by any of a number of installations commonly used for industrial applications.

The generated $MoO_3$ will move as a vapor into the lower pressure and cooled region of the heat exchanger 14 where it will condense and fall to the receiver 16 as a powder. For each 225 kilogram charge 336 kilograms of $MoO_3$ will be formed as a loose powder; at a packing fraction of 0.5 this constitutes 140 liters of solid. At the same time, assuming the original $UO_2$ contaminants are disposed in a uniform layer 0.25 millimeters thick over all the boat surfaces, a volume of nearly 4 liters of $U_3O_8$ would be left behind in the retort furnace 12.

The recovered $MoO_3$ has a value of approximately $4.00 per pound, resulting in a single furnace charge of 225 kilograms of scrap producing $MoO_3$ worth about $3,000.

Although recovered in much smaller quantities, the $U_3O_8$ containing uranium enriched in the range of 2.5 to

4 wt.% $U^{235}$, has a value of approximately $1,000 per kilogram of uranium.

The above-described embodiment oxidizes the Mo to $MoO_3$ without forming significant amounts of $MoO_2$ as an intermediate step. This is not the only possible process using this volatility principle. Any of the following may prove upon experimentation more practical or cost effective.

Heating the molybdenum scrap in a static atmosphere of oxygen at a temperature that is low enough so that only the lower oxide, $MoO_2$, is formed. The temperature is then increased to further oxidize the material to the higher oxide, $MoO_3$, employing an oxygen stream to carry the volatile material into a condenser as described above.

Another method is heating the molybdenum in a static atmosphere of oxygen at a temperature high enough to convert it completely to a liquid $MoO_3$, which will be contained in a refractory ceramic vessel. When conversion is complete the liquid is evaporated in a stream of nitrogen or other inert gas condensing it as described above.

A third method is heating the molybdenum in a static atmosphere of oxygen at a temperature that is low enough so only the lower oxide, $MoO_2$, is formed. After the transformation is complete the lower oxide is heated to a higher temperature in a static oxygen environment until it is converted into $MoO_3$. The $MoO_3$ is then evaporated in flowing inert gas and condensed as described above.

The above-described processes make use of the formation of a volatile oxide formed by reacting the metal molybdenum with oxygen. This property of volatility of the oxide is rare among metals and of the common industrial metals is shared only by molybdenum and tungsten. The above process may therefore be used also in separating tungsten from other contaminant metals and metal oxides, all of which are non-volatile. In the case of tungsten the high vapor pressure oxide is $WO_2$ which sublimates at 800°C.

CLAIMS:

1. A method of separating molybdenum or tungsten from non-volatile contaminants, characterized by

heating the contaminated molybdenum or tungsten to a temperature sufficient to vaporize the associated high vapor pressure oxide,

passing sufficient oxygen over the heated, contaminated molybdenum or tungsten to stoichiometrically react the latter with oxygen to form the high vapor pressure oxide thereof,

passing the gaseous oxide of molybdenum or tungsten through a condenser, causing it to solidify, and

recovering the separated oxide of molybdenum or tungsten.

2. A method according to claim 1, characterized in that the desired metal is molybdenum and the associated high vapor pressure oxide is $MoO_3$.

3. A method according to claim 1, characterized in that the desired metal is tungsten and the associated high vapor pressure oxide is $WO_2$.

4. A method according to claim 1, 2, or 3, characterized in that the heating is to a temperature of at least about 760°C.

5. A method according to claim 4, characterized in that the heating is from 760°C to 1100°C.

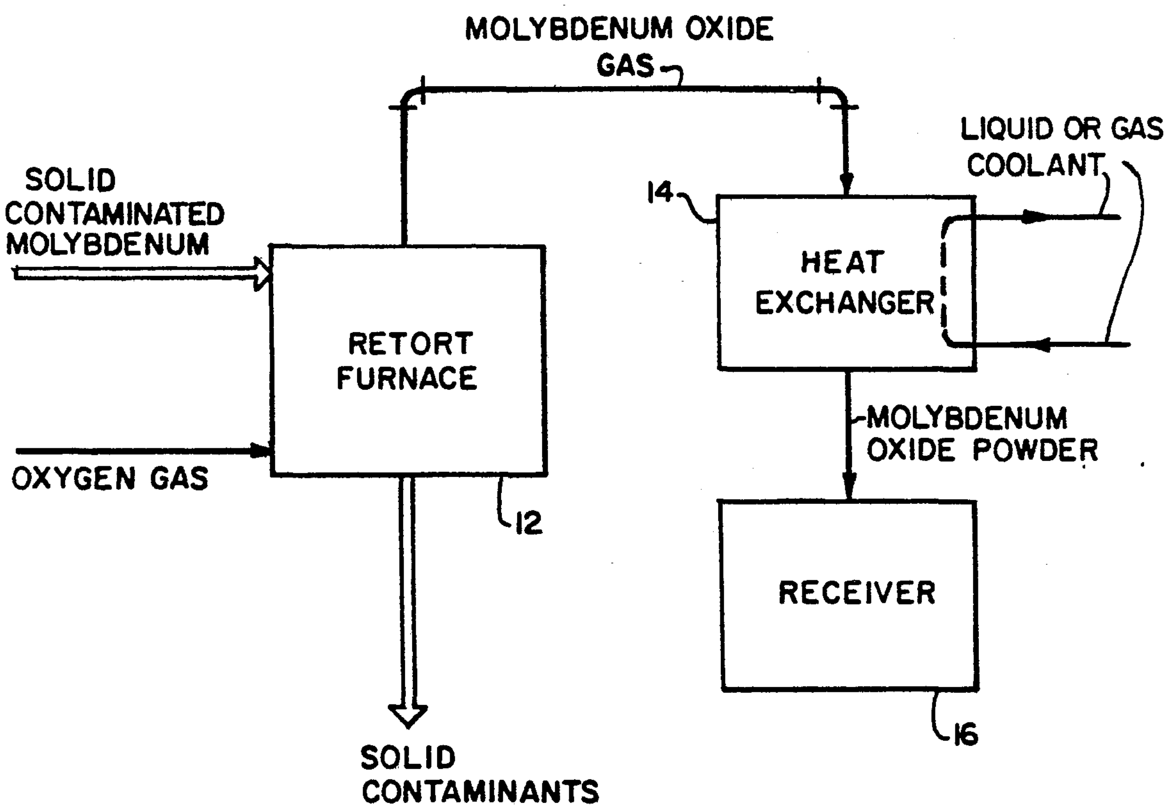

MOLYBDENUM OXIDE GAS
SOLID CONTAMINATED MOLYBDENUM
RETORT FURNACE
OXYGEN GAS
12
SOLID CONTAMINANTS
14
HEAT EXCHANGER
LIQUID OR GAS COOLANT
MOLYBDENUM OXIDE POWDER
RECEIVER
16